**Europäisches Patentamt**

(19) **European Patent Office**

**Office européen des brevets**

(11) Veröffentlichungsnummer: **0 177 480**

**B1**

(12) # EUROPÄISCHE PATENTSCHRIFT

(45) Veröffentlichungstag der Patentschrift:
14.10.87

(51) Int. Cl.⁴: **F 01 N 3/28**

(21) Anmeldenummer: **85890184.6**

(22) Anmeldetag: **16.08.85**

(54) **Katalytische Abgasreinigungseinrichtung.**

(30) Priorität: **17.08.84 DE 3430399**

(43) Veröffentlichungstag der Anmeldung:
**09.04.86 Patentblatt 86/15**

(45) Bekanntmachung des Hinweises auf die Patenterteilung:
**14.10.87 Patentblatt 87/42**

(84) Benannte Vertragsstaaten:
**AT CH FR GB IT LI SE**

(56) Entgegenhaltungen:
**FR-A-2 244 909**
**US-A-3 090 677**

(73) Patentinhaber: **VOEST- ALPINE St. Aegyd Aktiengesellschaft, A-3193 St. Aegyd am Neuwalde (AT)**

(72) Erfinder: **Lampel, Werner, Mitterbach 16, A-3193 St. Aegyd a.N. (AT)**
Erfinder: **Wurzer, Burghard, Augasse 6, A-3193 St. Aegyd a.N. (AT)**

(74) Vertreter: **Haffner, Thomas M., Dr., Patentanwaltskanzlei Dipl.- Ing. Adolf Kretschmer Dr. Thomas M. Haffner Schottengasse 3a, A-1014 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung bezieht sich auf eine katalytische Abgasreinigungseinrichtung für Brennkraftmaschinen, mit einer in einem aus Blech bestehenden Gehäuse angeordneten Trägermatrix für den Katalysator, an dessen Stirnenden ein Einströmtrichter und ein Abströmtrichter aus Blech anschließen, bei welcher die Trägermatrix über ihre gesamte Länge von einem rohrförmigen metallischen Mantel umgeben ist, dessen beide Stirnenden gegen den Einströmtrichter und den Abströmtrichter abgestützt sind, wobei zumindest zwischen dem rohrförmigen Mantel und dem Einströmtrichter ein Dichtring aus elastischem wärmebeständigem Material angeordnet ist.

Bei bekannten Einrichtungen dieser Art ist das Gehäuse mit dem Einströmtrichter und dem abströmtrichter gasdicht verschweißt. Die Verschweißung ist hiebei eine aufwendige Arbeit. Bei bekannten Einrichtungen dieser Art ist weiters die Trägermatrix zumeist unmittelbar gegebenenfalls unter Zwischenschaltung einer wärmedämmenden Schicht in das Gehäuse eingesetzt. Es ist daher eine starre Ausbildung der Trägermatrix erforderlich. Eine solche starre Ausbildung hat zur Voraussetzung, daß die Trägermatrix starr ausgebildet sein muß, wodurch wieder die Oberflächen, welche mit dem Katalysator beschichtet werden, kleiner werden.

Aus der DE-B-22 20 921 ist bereits eine Einrichtung der eingangs genannten Art bekannt geworden, bei welcher der Trägerkörper für den Katalysator von einem rohrförmigen Mantel umgeben ist. Der rohrförmige Mantel war unter Zwischenschaltung von Endringen gasdicht im Gehäuse stirnseitig und am Umfang gelagert.

Die Erfindung stellt sich zur Aufgabe, eine einfache Ausbildung einer katalytischen Abgasreinigungsvorrichtung mit großen wirksamen Oberflächen zu schaffen, welche fertigungstechnisch einfach und mit hoher Stabilität herstellbar ist. Die Ausbildung soll hiebei bei kleinen Baumassen eine hohe wirksame Querschnittsfläche des Katalysators aufweisen, welche durch die Konstruktion strömungstechnisch nicht beeinträchtigt ist. Zur Erreichung dieses Zieles besteht die Erfindung im wesentlichen darin, daß Einströmtrichter und Abströmtrichter über den gesamten Umfang des Gehäuses mit diesem durch Falzung verbunden sind, und daß die Stirnenden des rohrförmigen Mantels einen nach außen ragenden Ringbord aufweisen, welcher zweckmäßig von einer Aufstauchung des rohrförmigen Mantels gebildet ist, wobei der Dichtring zwischen Ringbord und Einströmtrichter bzw. Abströmtrichter angeordnet ist. Dadurch, daß die Trägermatrix über ihre gesamte Länge von einem rohrförmigen metallischen Mantel umgeben ist, wird die Trägermatrix durch diesen Mantel geschützt und versteift, so daß die wirksame Oberfläche derselben verhältnismäßig groß ausgebildet sein kann. Die Trägermatrix kann metallisch ausgebildet sein und dadurch, daß sie durch den rohrförmigen Mantel versteift ist, kann sie aus dünnen Metallfolien bestehen, welche zwischen sich Durchströmquerschnitte freilassen, wobei infolge der dünnen Ausbildung der Bleche oder Folien die wirksame Oberfläche, welche mit dem Katalysatormaterial beschichtet wird, vergrößert wird. Eine solche metallische Trägermatrix kann beispielsweise aus übereinandergeschichteten gewellten und ebenen Metallfolien bestehen, welche eingerollt und in den rohrförmigen Mantel eingesetzt werden. Dadurch, daß der rohrförmige Mantel gegen Einström- und Abströmtrichter abgestützt ist, wird eine einfache Ausführungsform ermöglicht. Dadurch, daß zumindest zwischen dem rohrförmigen Mantel und dem Einströmtrichter ein Dichtring aus elastischem wärmebeständigem Material angeordnet ist, wird der rohrförmige Mantel gegen den Einströmtrichter abgedichtet, so daß eine gasdichte Verschweißung zwischen Einströmtrichter und Gehäuse überflüssig wird und zur Verbindung von Einströmtrichter und Abströmtrichter mit dem Gehäuse eine Falzung ausreicht. Dadurch, daß der Dichtring aus elastischem Material besteht, wird auch einer ungleichförmigen Wärmedehnung des rohrförmigen Mantels und des Gehäuses Rechnung getragen. Dadurch, daß die Stirnenden des rohrförmigen Gehäuses einen nach außen ragenden Ringbord aufweisen, welcher zweckmäßig von einer Aufstauchung des rohrförmigen Mantels gebildet ist, wird eine gute Auflage des Dichtringes am rohrförmigen Mantel ermöglicht. Gleichzeitig wird der lichte Querschnitt des Katalysators von die Strömung beeinträchtigenden Einbauten freigehalten.

Um ein Vorbeiströmen der zu reinigenden Abgase an der Trägermatrix durch den Spalt zwischen dem rohrförmigen Mantel und dem Gehäuse zu verhindern, genügt der zwischen dem rohrförmigen Mantel und dem Einströmtrichter vorgesehene Dichtring. An der Ausströmseite aus der Trägermatrix ist der Druck der Abgase bereits geringer. Vorzugsweise ist aber der rohrförmige Mantel auch gegen den Abströmtrichter unter Zwischenschaltung eines Dichtringes abgestützt. Wenn der rohrförmige Mantel gemäß einer vorteilhaften Ausführungsform der Erfindung auch gegen den Abströmtrichter elastisch abgestützt ist, so wird dadurch der mögliche ungleiche Dehnungsweg des rohrförmigen Mantels und des Gehäuses vergrößert.

Gemäß einer weiteren bevorzugten Ausführungsform der Erfindung weisen Einströmtrichter und Abströmtrichter im Bereich der Anschlußstelle an das Gehäuse eine in einer senkrecht zur Achse stehenden Ebene liegende ringförmige Abstützfläche auf. Dadurch wird die Abstützung des rohrförmigen Mantels und auch die dichtende Anlage des Dichtringes an demselben am Einströmtrichter und am Abströmtrichter verbessert. Der Dichtring kann bei der vorteilhaften Ausführungsform aus einer Fasermatte von keramischen Fasern bestehen. In besonders bevorzugter Weise besteht dabei der Dichtring aus einer Blähmatte, welche unter Wärmeeinwirkung ihr Volumen vergrößert.

Gemäß der Erfindung ist die Anordnung vorzugsweise so getroffen, daß zur Bildung der Falzverbindung zwischen Gehäuse und Einström- und Abströmtrichter das Gehäuse an seinen Enden einen nach außen abgebogenen und um 180° zur Mitte des Gehäuses im Querschnitt C-förmig zurückgebogenen Ringbord aufweist, der von einer im Querschnitt doppel-C-förmigen Abbiegung des Einströmtrichters bzw. Abströmtrichters umgriffen ist. Dadurch wird eine gute Verbindung des Einströmtrichters und des Abströmtrichters mit dem Gehäuse erreicht und vor allem bildet auf diese Weise die Falzverbindung selbst eine Labyrinthdichtung, welche auch dann, wenn der Dichtring eine Undichtheit aufweist oder wenn zwischen dem rohrförmigen Mantel und dem Abströmtrichter kein Dichtring vorgesehen ist, ein Ausströmen der Abgase nach außen verhindert.

Der rohrförmige Mantel weist über seine ganze Länge, und zwar auch in dem über die Trägermatrix vorstehenden Bereich, gleichen Querschnitt auf. Zweckmäßig ist dieser Mantel als Zylinder mit kreisförmigem oder ovalem Querschnitt ausgebildet. Gemäß der Erfindung ist zweckmäßig zwischen dem Gehäuse und dem rohrförmigen Mantel eine wärmedämmende Zwischenschicht, vorzugsweise eine Fasermatte aus keramischen oder mineralischen Fasern, angeordnet. Der Katalysator ist hauptsächlich oberhalb eines gewissen Temperaturbereiches wirksam und durch eine solche wärmedämmende Zwischenschicht wird die Wirksamkeit des Katalysators begünstigt. Überdies wird auch das Gehäuse nicht übermäßig erhitzt.

Gemäß der Erfindung bestehen vorzugsweise die Trägermatrix und der rohrförmige Mantel aus Edelstahl.

In der Zeichnung ist die Erfindung an Hand von Ausführungsbeispielen schematisch veranschaulicht, welche eine katalytische Abgasreinigungsvorrichtung für Brennkraftmaschinen, insbesondere von Fahrzeugmotoren, zeigen.

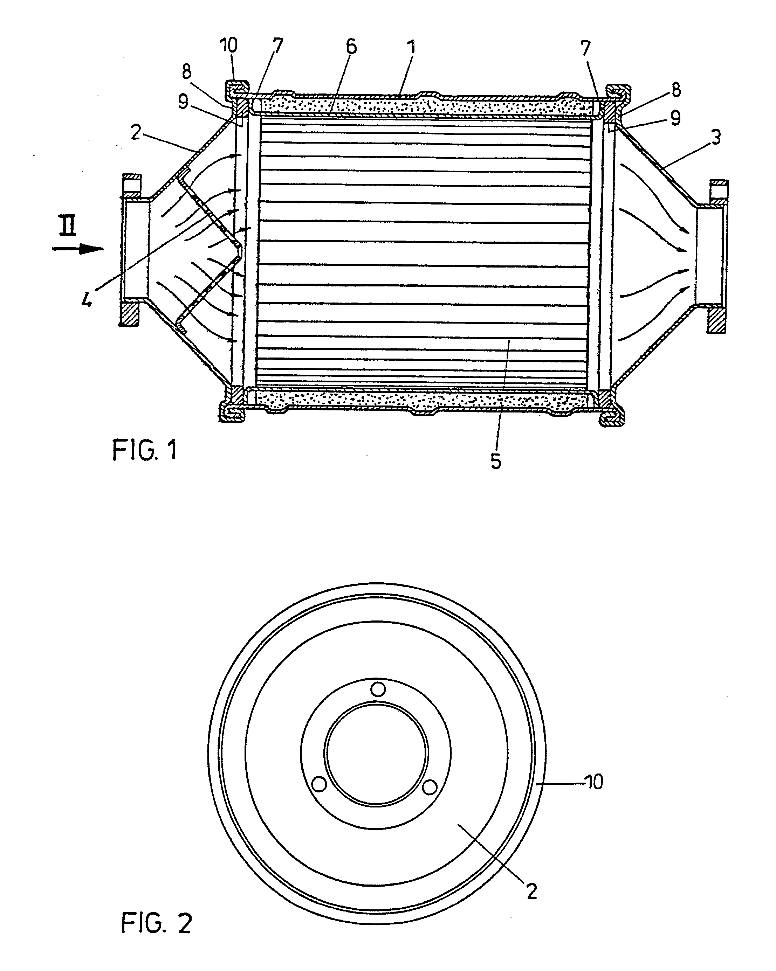

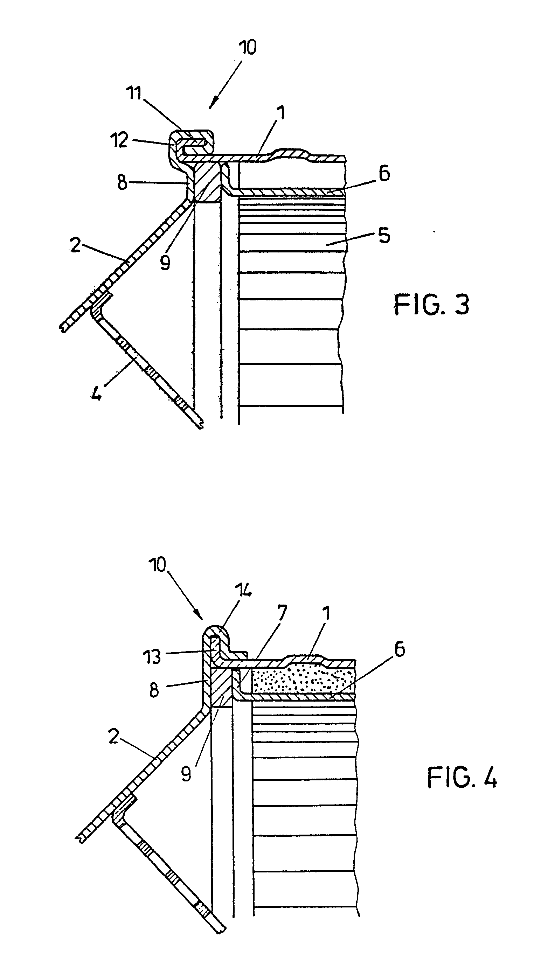

Fig. 1 zeigt einen Axialschnitt durch eine Abgasreinigungseinrichtung für Brennkraftmaschinen, u.zw. insbesondere für Fahrzeugmotoren. Fig. 2 zeigt eine Stirnansicht in Richtung des Pfeiles II der Fig. 1. Fig. 3 zeigt in größerem Maßstab einen Schnitt durch die Falzverbindung gemäß Fig. 1. Fig. 4 zeigt eine abgewandelte Ausführungsform der Falzverbindung im Querschnitt.

1 ist das Gehäuse, 2 der Einströmtrichter und 3 der Abströmtrichter. In den Einströmtrichter ist ein gelochtes kegelförmiges Verteilerblech 4 für die einströmenden Abgase angeordnet. 5 ist die metallische Trägermatrix, welche beispielsweise aus gewickelten Blechfolien besteht, zwischen welchen längsverlaufende Durchströmkanäle bestehen, deren Wände mit dem Katalysatormaterial beschichtet sind.

6 ist ein rohrförmiger kreiszylindrischer Mantel, welcher die Trägermatrix 5 umgibt und eine gute Halterung für die Trägermatrix bildet, so daß die Trägermatrix aus dünnen Metallfolien bestehen kann. Der rohrförmige Mantel 6 weist an beiden Enden einen nach außen ragenden Ringbord 7 auf, welcher in einer senkrecht zur Achse des Mantels 6 stehenden Ebene liegt. Der Einströmtrichter 2 und der Abströmtrichter 3 weisen eine ringförmige Abstützfläche 8 auf, welche in einer senkrecht zur Achse des Mantels 6 stehenden Ebene liegt. Zwischen dem Ringbord 7 und der ringförmigen Abstützfläche 8 sind Dichtringe 9 aus elastischem Material angeordnet. Diese Dichtringe bestehen aus einer Fasermatte aus keramischen oder mineralischen Fasern, u.zw. insbesondere aus einer Blähmatte, welche unter Wärmeeinwirkung ihr Volumen vergrößert.

Der Einströmtrichter 2 und der Abströmtrichter 3 sind mit dem Gehäuse 1 durch eine Falzung 10 verbunden. Wie in Fig. 3 in größerem Maßstab dargestellt ist, besteht diese Falzung darin, daß die Enden des Mantels 1 eine im Querschnitt C-förmige Abbiegung 11 um 180° zur Mitte des Gehäuses aufweist. An die Abstützfläche 8 schließt ein Blechstreifen 12 an, der doppel-C-förmig abgebogen ist und die Abbiegung 11 des Gehäuses doppel-C-förmig umgreift. Fig. 4 zeigt im größeren Querschnitt eine abgewandelte Ausführungsform der Falzung 10. Hier weist das Gehäuse 1 einen rechtwinkelig nach außen abgebogenen Bord 13 auf, der von einer C-förmigen Abbiegung 14 des Einströmtrichters 2 umgriffen wird. Eine solche Art der Falzung bietet zwar eine geringere Labyrinthdichtwirkung, jedoch ist die Falzung einfacher durchzuführen, weil das Falzwerkzeug außen angreifen kann.

**Patentansprüche**

1. Katalytische Abgasreinigungseinrichtung für Brennkraftmaschinen, mit einer in einem aus Blech bestehenden Gehäuse (1) angeordneten Trägermatrix für den Katalysator, an dessen Stirnenden ein Einströmtrichter (2) und ein Abströmtrichter (3) aus Blech anschließen, bei welcher die Trägermatrix (5) über ihre gesamte Länge von einem rohrförmigen metallischen Mantel (6) umgeben ist, dessen beide Stirnenden gegen den Einströmtrichter (2) und den Abströmtrichter (3) abgestützt sind, wobei zumindest zwischen dem rohrförmigen Mantel (6) und dem Einströmtrichter (2) ein Dichtring (9) aus elastischem wärmebeständigem Material angeordnet ist, dadurch gekennzeichnet, daß Einströmtrichter (2) und Abströmtrichter (3) über den gesamten Umfang des Gehäuses (1) mit diesem durch Falzung verbunden sind, und daß die Stirnenden des rohrförmigen Mantels einen nach außen ragenden Ringbord (7) aufweisen, welcher zweckmäßig von einer Aufstauchung des rohrförmigen Mantels (6) gebildet ist, wobei der Dichtring (9) zwischen Ringbord (7) und Einströmtrichter (2) bzw. Abströmtrichter (3) angeordnet ist.

2. Katalytische Abgasreinigungseinrichtung nach Anspruch 1, dadurch gekennzeichnet, daß Einströmtrichter (2) und Abströmtrichter (3) im Bereich der Anschlußstelle an das Gehäuse eine in einer senkrecht zur Achse stehenden Ebene liegende ringförmige Abstützfläche (8) aufweisen.

3. Katalytische Abgasreinigungseinrichtung nach einem der Ansprüche 1 oder 2, dadurch gekennzeichnet, daß der Dichtring (9) aus einer Fasermatte von keramischen Fasern besteht.

4. Katalytische Abgasreinigungseinrichtung nach Anspruch 3, dadurch gekennzeichnet, daß der Dichtring aus einer Blähmatte besteht, welche unter Wärmeeinwirkung ihr Volumen vergrößert.

5. Katalytische Abgasreinigungseinrichtung nach einem der Ansprüche 1 bis 4, dadurch gekennzeichnet, daß zur Bildung der Falzverbindung zwischen Gehäuse (1) und Einström- (2) und Abströmtrichter (3) das Gehäuse an seinen Enden einen nach außen abgebogenen und um 180° zur Mitte des Gehäuses im Querschnitt C-förmig zurückgebogenen Ringbord (11) aufweist, der von einer im Querschnitt doppelt C-förmigen Abbiegung (12) des Einströmtrichters (2) bzw. Abströmtrichters (3) umgriffen ist.

6. Katalytische Abgasreinigungseinrichtung nach einem der Ansprüche 1 bis 5, dadurch gekennzeichnet, daß die Trägermatrix (5) und der rohrförmige Mantel (6) aus Edelstahl bestehen.

7. Katalytische Abgasreinigungseinrichtung nach einem der Ansprüche 1 bis 6, dadurch gekennzeichnet, daß zwischen dem Gehäuse (1) und dem rohrförmigen Mantel (6) eine Fasermatte aus keramischen oder mineralischen Fasern angeordnet ist.

## Claims

1. Catalytic exhaust gas cleaning device for internalcombustion engines with a catalyst support matrix placed in a casing (1) made of sheet metal, to the ends of which are connected an inlet cone (2) and an outlet cone (3) made of sheet metal, the support matrix (5) being surrounded over its entire length by a tubular metal jacket (6) of which both ends are braced against the inlet cone (2) and the outlet cone (3), a gasket (9) made of elastic, heatresistant material being placed at least between the tubular jacket (6) and the inlet cone (2), characterized in that the inlet cone (2) and the outlet cone (3) are connected to the casing (1) over the whole perimeter of the same by folding, and in that the ends of the tubular jacket have an outward-projecting circular rim (7) which is appropriately formed from an upset of the tubular jacket (6), the gasket (9) being placed between the circular rim (7) and the inlet cone (2) or outlet cone (3).

2. Catalytic exhaust gas cleaning device according to Claim 1, characterized in that the inlet cone (2) and outlet cone (3) have, near the points of attachment to the casing, a circular support flange (8) in a plane lying perpendicular to the axis.

3. Catalytic exhaust gas cleaning device according to one of Claims 1 or 2, characterized in that the gasket (9) is composed of a fibre mat of ceramic fibres.

4. Catalytic exhaust gas cleaning device according to Claim 3, characterized in that the gasket is composed of an expanding mat which increases in volume with the effect of heat.

5. Catalytic exhaust gas cleaning device according to one of Claims 1 to 4, characterized in that, to form the folded joint between the casing (1) and inlet (2) and outlet (3) cones, the casing has at its ends a circular rim (11) which is bent outwards and bent back through 180° towards the centre of the casing with a C-shaped cross-section and around which is wrapped an offset (12), with double C-shaped cross-section, of the inlet cone (2) or outlet cone (3).

6. Catalytic exhaust gas cleaning device according to one of the Claims 1 to 5, characterized in that the support matrix (5) and the tubular jacket (6) are composed of stainless steel.

7. Catalytic exhaust gas cleaning device according to one of the Claims 1 to 6, characterized in that a fibre mat made of ceramic or mineral fibres is placed between the casing (1) and the tubular jacket (6).

## Revendications

1. Dispositif d'épuration catalytique des gaz d'échappement, notamment pour des moteurs à combustion interne, comportant une matrice de support du catalyseur disposée dans un carter (1) constitué de tôle et aux extrémités frontales duquel sont disposés un entonnoir d'entrée d'écoulement (2) et un entonnoir de sortie d'écoulement (3) en tôle, la matrice de support (5) étant entourée sur toute sa longueur par une enveloppe métallique (6) de forme tubulaire dont les deux extrémités frontales s'appuient contre l'entonnoir d'entrée d'écoulement (2) et l'entonnoir de sortie d'écoulement (3), un anneau d'étanchéité (9) formé d'un matériau élastique réfractaire étant disposé au moins entre l'enveloppe de forme tubulaire (6) et l'entonnoir d'entrée d'écoulement (2), caractérisé en ce que l'entonnoir d'entrée d'écoulement (2) et l'entonnoir de sortie d'écoulement (3) sont reliés sur toute la périphérie du carter (1) avec celui-ci par un pli et en ce que les extrémités frontales de l'enveloppe de forme tubulaire comportent un bord annulaire (7) faisant saillie vers l'extérieur et avantageusement constitué par une partie refoulée de l'enveloppe de forme tubulaire (6), l'anneau d'étanchéïté (9) étant disposé entre le bord annulaire (7) et l'entonnoir d'entrée d'écoulement (2) ou l'entonnoir de sortie d'écoulement (3).

2. Dispositif d'épuration catalytique des gaz d'échappement selon la revendication 1, caractérisé en ce que l'entonnoir d'entrée d'écoulement (2) et l'entonnoir de sortie d'écoulement (3) comportent dans la région de la zone de raccordement avec le carter, une surface annulaire d'appui (8) qui est placée dans un plan perpendiculaire à l'axe.

3. Dispositif d'épuration catalytique des gaz d'échappement selon une des revendications 1 ou 2, caractérisé en ce que l'anneau d'étanchéïté (9) est constitué d'un ruban en fibres céramiques.

4. Dispositif d'épuration catalytique des gaz d'échappement selon la revendication 3, caractérisé en ce que l'anneau d'étanchéïté est constitué d'un ruban gonflant dont le volume augmente sous l'action du chauffage.

5. Dispositif d'épuration catalytique des gaz d'échappement selon l'une des revendications 1 à 4, caractérisé en ce que, pour former la liaison par pli entre le carter (1) et les entonnoirs d'entrée d'écoulement (2) et de sortie d'écoulement (3), le carter comporte à ses extrémités un bord annulaire (11) rabattu vers l'extérieur et rabattu à nouveau de 180° en direction du milieu du carter de façon à avoir une section droite en forme de C, bord qui est enserré par un pliage en forme de double C en coupe (12) de l'entonnoir d'entrée d'écoulement (2) ou de l'entonnoir de sortie d'écoulement (3).

6. Dispositif d'épuration catalytique des gaz d'échappement selon une des revendications 1 à 5, caractérisé en ce que la matrice de support (5) et l'enveloppe de forme tubulaire (6) sont constitués d'acier allié.

7. Dispositif d'épuration catalytique des gaz d'échappement selon une des revendications 1 à 6, caractérisé en ce qu'entre le carter (1) et l'enveloppe de forme tubulaire (6) est disposé un ruban de fibres céramiques ou minérales.

FIG. 1

FIG. 2

FIG. 3

FIG. 4